# FASCICULE DE BREVET EUROPEEN

(11) **EP 2 337 265 B1**
(45) Date de publication et mention de la délivrance du brevet: **03.04.2019**
(21) Numéro de dépôt: 10306442.4
(22) Date de dépôt: 17.12.2010
(51) Int. Cl.: H04L 12/24, H04L 12/701, H04L 12/759, H04L 12/26, H04L 29/06, H04L 29/08

(54) **Gestion de réseau basée sur évènements**
Ereignisbasierte Netzwerkverwaltung
Event-based network management

(30) Priorité: 17.12.2009 FR 0959104
(43) Date de publication de la demande: 22.06.2011
(73) Titulaire: SOCIETE FRANCAISE DU RADIO TELEPHONE (SFR), 75015 Paris (FR)
(72) Inventeur: Teimoorzadeh, Kourosh, 28130 Bouglainval (FR)
(74) Mandataire: Lavoix

(56) Documents cités:
- US-A1- 2002 073 195
- US-A1- 2002 194 319
- US-A1- 2004 111 652
- US-B1- 7 457 866
- HUNTER D K ET AL: "Protection of long-reach PON traffic through router database synchronization", JOURNAL OF OPTICAL NETWORKING, vol. 6, no. 5, mai 2007 (2007-05), pages 535-549, XP002594455, OPT. SOC. AMERICA USA ISSN: 1536-5379, DOI: 10.1364/JON.6.000535

## Description

La présente invention concerne le fonctionnement des dispositifs informatiques actifs dans un réseau informatique tel qu'un réseau de télécommunication, ces dispositifs étant formés par exemple par des routeurs, des commutateurs, etc.

A ce jour, le fonctionnement classique de ces dispositifs actifs est essentiellement basé sur un mode de traitement planifié de sorte que chacun de ces dispositifs réagit de façon prédictive aux stimuli et/ou événements en provenance de leur environnement.

Par exemple, dans le cas d'un routeur, sa capacité à réagir de façon plus ou moins optimale est influencée par le contenu et la quantité d'informations à traiter conformément aux règles de routage et de filtrage préétablis comme par exemple le débit du trafic en fonction du niveau de qualité de service attendu ou la gestion de résilience et le choix des routes alternatives en cas de problèmes (ex. rupture d'une liaison, etc).

Il est également important de souligner l'impact de l'organisation (architecture) de ces équipements actifs en terme de sécurité de l'information.

Etant donnée la complexité croissante des réseaux de télécommunication (fixe, mobile, sans fil, ad hoc, distribué, etc) et des usages divers et variés (téléphonie, télématique, bureautique, domotique, etc), ce mode d'organisation et de fonctionnement statique s'avère de plus en plus inadapté aux contraintes de la qualité de service, ce notamment, en terme de gestion optimale de la sécurité de l'information.

Actuellement le fonctionnement habituel d'un dispositif informatique d'un réseau informatique est de prendre des décisions à partir notamment de communications de messages qu'il réalise avec les autres dispositifs du réseau, c'est-à-dire, dans le cadre de la présente invention, à partir de messages entrants dont il est le destinataire et/ou de messages sortants dont il est l'émetteur. Ces communications de messages lui permettent de détecter des évènements à partir desquels il prend, selon des règles prédéterminées, des décisions affectant son fonctionnement et en particulier l'envoi de messages sortants.

Par exemple, un premier routeur ne recevant pas de réponse à ses messages sortants (communication de message) qu'il émet à destination d'un second routeur, en déduit que ce second routeur est indisponible (évènement) et modifie en conséquence sa table de routage afin que les messages soient routés vers un autre routeur disponible (envoi de messages sortants).

De tels dispositifs sont par exemple décrits dans l'étude intitulée « Protection of long-reach PON traffic through router database synchronization », par HUNTER D K ET AL, publiée en mai 2007 dans le Journal of Optical Networking, et dans le document US 2002/194319 A1.

Les dispositifs décrits dans ces documents ne donnent pas entière satisfaction car ils réagissent de façon planifiée aux évènements et/ou stimuli en provenance de leur environnement.

Le but de l'invention est de permettre aux dispositifs d'un réseau de prendre des décisions significativement améliorées.

A cet effet, l'invention a pour objet un procédé de fonctionnement conforme à la revendication 1.

Grâce à l'invention, le dispositif informatique prend une décision sur la base d'évènements détectés par d'autres dispositifs informatiques du réseau informatique. Pour reprendre l'exemple précédent, l'invention permet au premier routeur de manière avantageuse de changer sa table de routage lorsqu'un autre dispositif du réseau détecte l'indisponibilité du second routeur, alors même qu'il ne l'a lui-même pas encore détectée.

L'invention permet en particulier d'optimiser les opérations primordiales des réseaux de télécommunication, telles que le routage et le filtrage des messages dans le réseau.

Selon d'autres aspects de l'invention, le procédé de fonctionnement d'un dispositif informatique comprend l'une ou plusieurs des caractéristiques de la revendication 2.

L'invention concerne également un programme d'ordinateur, conforme à la revendication 3.

L'invention concerne en outre un dispositif informatique d'un réseau informatique, conforme à la revendication 4.

L'invention concerne enfin un réseau informatique, conforme à la revendication 5.

On va à présent décrire un mode de réalisation préféré de l'invention, à titre d'exemple non limitatif. La description de ce mode de réalisation fait référence aux figures annexées suivantes :
- la figure 1 qui représente un exemple de réseau informatique selon l'invention ; et
- la figure 2 qui représente les étapes d'un exemple de procédé de fonctionnement de chaque dispositif informatique du réseau informatique de la figure 1.

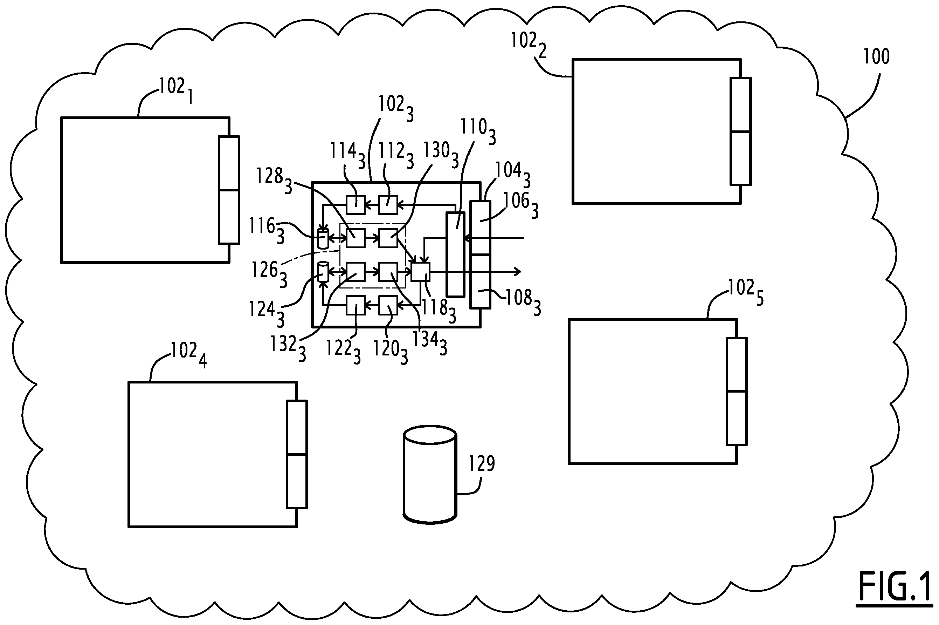

Un réseau informatique 100 selon l'invention est représenté sur la figure 1. Il s'agit par exemple d'un réseau de télécommunication.

Dans la présente description, le terme de réseau signifie aussi bien un seul réseau informatique, par exemple un réseau local, qu'un ensemble de réseaux informatiques interconnectés entre eux, tel que le réseau Internet.

Le réseau 100 comprend des dispositifs informatiques 102₁...102₅, aussi appelés « noeuds » du réseau 100. En particulier, dans l'exemple illustré, le dispositif 102₃, est un routeur de communication.

Chacun des dispositifs 102₁...102₅ est conforme à un modèle donné d'architecture en couches protocolaires. Les dispositifs 102₁...102₅ sont par exemple conformes au modèle OSI ou bien au modèle TCP/IP. Tous les dispositifs du réseau 100 sont conçus pour pouvoir communiquer les uns avec les autres, en s'échangeant des messages.

A cet effet, chaque dispositif 102₁...102₅ comprend un module de communication 104₁...104₅ comprenant, d'une part, des moyens de réception 106₁...106₅ conçus pour recevoir des messages entrants provenant d'autres dispositifs du réseau 100 et, d'autre part, des moyens d'émission 108₁...108₅ conçus pour émettre des messages sortants à destination d'autres dispositifs du réseau 100.

Chaque dispositif 102₁...102₅ comprend en outre des moyens d'analyse de communication 110₁...110₅ conçus pour analyser au moins un message entrant et/ou au moins un message sortant, afin d'obtenir un résultat d'analyse de communication.

Les moyens d'analyse de communication 110₁...110₅ sont par exemple conçus pour:
- détecter qu'un message transporte des données sensibles nécessitant une protection optimale,
- calculer le temps d'aller/retour d'un message à partir de messages de requête,
- détecter, à partir des communications, une rupture d'une liaison physique ou logique.

Chaque dispositif 102₁...102₅ comprend en outre des moyens de génération de donnée d'événement 112₁...112₅ conçus pour générer une donnée d'événement à partir du résultat d'analyse de communication.

Chaque dispositif 102₁...102₅ comprend en outre des moyens d'enregistrement d'événement 114₁...114₅ conçus pour enregistrer la donnée d'événement dans une base de données d'évènements 116₁...116₅, commune à tous les dispositifs du réseau 100, c'est-à-dire que tous les moyens d'enregistrement d'événement 114₁...114₅ sont conçus pour enregistrer les données d'évènements dans cette même base de données 116₁... 116₅.

Dans l'exemple illustré, la base de données d'évènements est distribuée entre des dispositifs du réseau 100, c'est-à-dire que les données qu'elle contient sont enregistrées en partie sur chacun de ces dispositifs. Cependant, la base de données d'évènements est vue de l'extérieur, et en particulier pour la lecture et l'écriture, comme une base de données unitaire.

En variante non illustrée, la base de données d'évènements est contenue dans un seul dispositif du réseau.

Par ailleurs, le terme de base de données ne doit pas être interprété de manière restrictive. La base de données d'évènements peut être constituée de plusieurs base de données, consultées en même temps ou tour à tour.

Chaque dispositif 102₁...102₅ comprend en outre un module de pilotage 118₁...118₅ conçu pour prendre une décision affectant notamment des messages sortants. En particulier, le module de pilotage 118₁...118₅ est conçu pour générer des messages sortants en fonction de la décision prise.

Dans le cas du routeur 102₃, les moyens de pilotage 118₃ comprennent par exemple une table de routage et des règles pour modifier la table de routage en fonction de critères, comme cela sera expliqué plus loin.

Chaque dispositif 102₁...102₅ comprend en outre des moyens de génération de compte-rendu 120₁...120₅ conçus pour générer un compte-rendu à partir d'au moins une décision prise par le module de pilotage 118₁...118₅.

Chaque dispositif 102₁...102₅ comprend en outre des moyens d'enregistrement de compte-rendu 122₁...122₅ conçus pour enregistrer le compte-rendu dans une base de données d'historique 124₁...124₅ commune aux dispositifs du réseau 100.

Dans l'exemple illustré, la base de données d'historique est également distribuée entre des dispositifs du réseau 100. Dans une variante non illustrée, elle pourrait, comme pour la base de données d'évènements, être contenue dans un seul dispositif.

Chaque dispositif 102₁...102₅ comprend en outre un module d'analyse événementielle 126₁...126₅.

Le module d'analyse événementielle 126₁...126₅ comprend des moyens de consultation de base de données d'évènements 128₁...128₅ conçus pour consulter la base de données d'évènements 116₁...116₃, et des moyens d'analyse d'événement 130₁...130₅ conçus pour analyser une ou plusieurs données d'évènements consultées, afin d'obtenir un résultat d'analyse d'évènement.

En outre, de préférence, les moyens de consultation 128₁...128₅ sont conçus pour consulter au moins une autre base de données 129 d'évènements dits contextuels, que la base de données d'évènements 116₁...116₅ renseignée par les dispositifs du réseau 100. Cette autre base de données 129 est par exemple : une base de données de malware et/ou d'alertes de sécurité, une base de données dite EIR (de « Equipment Identity Register ») comprenant des informations de sécurité relatives à des téléphones mobiles, une base de données de météo, etc.

Ainsi, de préférence, les moyens d'analyse 130₁...130₅ sont en outre conçus pour analyser une ou plusieurs données de l'autre base de données 129 et tenir compte de cette analyse dans le résultat d'analyse d'évènement.

Le module d'analyse événementielle 126₁,...126₅ comprend en outre des moyens de consultation de base de données d'historique 132₁...132₅ conçus pour consulter la base de données d'historique 124₁...124₅, et des moyens d'analyse de compte-rendu d'action 134₁...134₅ pour analyser un ou plusieurs comptes-rendus consultés, afin d'obtenir un résultat d'analyse d'historique.

Afin de tenir compte des bases de données d'évènements 128₁...128₅ et 129, ainsi que de la base de données d'historique 124₁...124₅, le module de pilotage 118₁...118₅ est conçu pour prendre une décision en fonction de critères comprenant au moins le résultat d'analyse de communication, le résultat d'analyse d'événement et le résultat d'analyse d'historique, cette décision affectant les messages sortants émis par la suite.

Dans le cas du routeur 102₃, les règles des moyens de pilotage 118₃ sont conçues par exemple pour modifier la table de routage en fonction des critères précédents, afin de générer des messages sortants correspondant au routage de messages entrants suivant la nouvelle table de routage.

Ainsi, chaque dispositif informatique 102₁...102₅ est apte à fonctionner en prenant en compte, non seulement les évènements qu'il détecte (au moyen du résultat d'analyse de communication), mais également les évènements détectés par d'autres dispositifs du réseau 100 (au moyen du résultat d'analyse d'événement), ainsi que les décisions prises par d'autres dispositifs du réseau 100 (au moyen du résultat d'analyse d'historique).

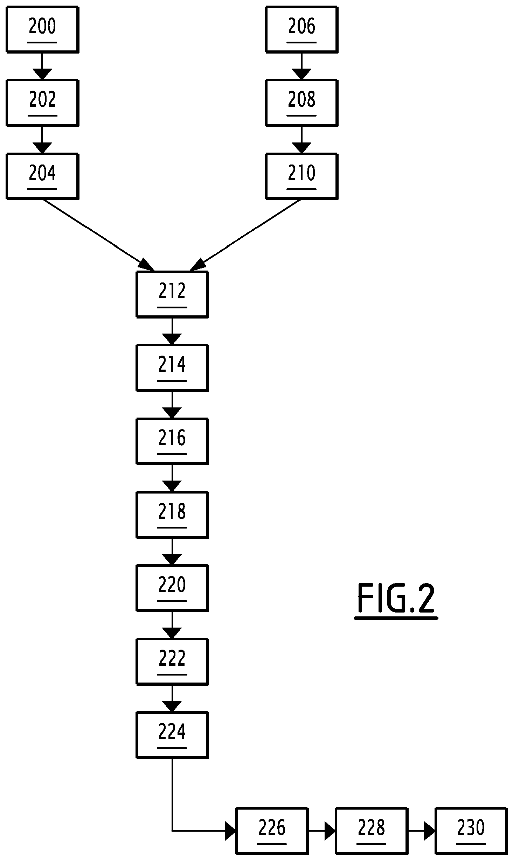

En référence à la figure 2, un exemple de fonctionnement des dispositifs informatiques 102₁...102₅ va être décrit.

Les étapes 200 à 204 suivantes concernent le renseignement de la base de données d'évènements 116₁...116₅ par un dispositif du réseau 100, par exemple le dispositif 102₂.

Au cours d'une étape 200, les moyens d'analyse de communication 110₂ analysent au moins une communication de message à laquelle participe le dispositif informatique 102₂ et produisent en conséquence un résultat d'analyse de communication.

Au cours d'une étape 202, les moyens de génération d'événement 112₃ génèrent une donnée d'événement à partir du résultat d'analyse de communication.

Au cours d'une étape 204, les moyens d'enregistrement d'événement 114₃ enregistrent la donnée d'événement dans la base de données d'évènements 116₁...116₅.

Les étapes 206 à 210 suivantes concernent le renseignement de la base de données d'historique, par un dispositif du réseau 100, par exemple le dispositif 102₄. Cependant, ces étapes pourraient également être mises en oeuvre par le dispositif ayant renseigné la base de données d'évènements (le dispositif 102₂ dans l'exemple précédent).

Au cours d'une étape 206, les moyens de pilotage 118₄ prennent une décision affectant les messages sortants, émis par les moyens d'émission 108₄ de ce dispositif 102₄.

Au cours d'une étape 208, les moyens de génération de compte-rendu 120₄ du dispositif 102₄ génèrent un compte-rendu à partir de la décision prise.

Au cours d'une étape 210, les moyens d'enregistrement de compte-rendu 122₄ enregistrent le compte-rendu dans la base de données d'historique 124₁...124₅.

Les étapes 212 à 224 suivantes concernent l'utilisation des deux bases de données pour une prise de décision améliorée, par exemple par le dispositif 102₃.

Au cours d'une étape 212, le dispositif 102₃ participe à une communication de message. Cette communication comprend la réception d'au moins un message entrant et/ou l'émission d'au moins un message sortant par le module de communication 104₃.

Au cours d'une étape 214, les moyens d'analyse de communication 110₃ analysent la communication pour obtenir un résultat d'analyse de communication.

Au cours d'une étape 216, les moyens de consultation de base de données d'évènements 128₃ consultent la base de données d'évènements 116₁...116₃ et y trouvent en particulier la donnée d'évènement enregistrée par le dispositif 102₂. En outre, au cours de cette étape, ils consultent également la base de données 129.

Au cours d'une étape 218, les moyens d'analyse d'évènement 130₃ analysent la donnée d'évènement enregistrée par le dispositif 102₂, ainsi qu'au moins une donnée enregistrée dans la base 129, pour obtenir un résultat d'analyse d'évènement.

Au cours d'une étape 220, les moyens de consultation de la base de données d'historique 132₃ consultent la base de données d'historique 124₁...124₅ et y trouvent en particulier le compte-rendu enregistré par le dispositif 104₂.

Au cours d'une étape 222, les moyens d'analyse de compte-rendu 134₃ analysent le compte-rendu enregistré par le dispositif 102₄, pour produire un résultat d'analyse d'historique.

Au cours d'une étape 224, le module de pilotage 118₃ prend une décision affectant les messages sortants émis par la suite, à partir des critères comprenant au moins le résultat d'analyse de communication de message, le résultat d'analyse d'évènement, et le résultat d'analyse d'historique.

La prise de décision en fonction des critères précédents affecte les messages sortants :
- pour déterminer si un message sortant doit être envoyé (cas 1), et/ou
- pour générer un message sortant devant être envoyé (cas 2).

Dans le premier cas, le module de pilotage 118₃ détermine, en fonction des critères précédents comprenant au moins le résultat d'analyse de communication, le résultat d'analyse d'évènement et le résultat d'analyse d'historique, si un message sortant doit être envoyé.

Dans le second cas, le module de pilotage génère, en fonction des critères comprenant au moins le résultat d'analyse de communication, le résultat d'analyse d'évènement et le résultat d'analyse d'historique, un message sortant, ce dernier possédant ainsi des caractéristiques choisies en fonction des critères précédents.

Au cours d'une étape 226, le module de pilotage 118₃ détermine si un message sortant doit être envoyé. Suivant la décision prise à l'étape 220, la détermination est faite en fonction des critères précédents ou non (par exemple dans le cas d'un message sortant automatique dont l'envoi est prédéterminé).

Si un message sortant doit être envoyé, le module de pilotage 118₃ génère, au cours d'une étape 228, un message sortant. Suivant la décision prise à l'étape 220, la génération est faite en fonction des critères précédents ou non.

Si la génération est faite en fonction des critères précédents, le module de pilotage 118₃ génère, par exemple, le message sortant en sélectionnant, en fonction des critères précédents, un protocole de communication pour une des couches protocolaires et en générant le message sortant selon le protocole de communication sélectionné. Par exemple, le protocole de communication sélectionné offre un meilleur niveau de sécurité.

En variante ou en complément, le module de pilotage 118₃ génère, par exemple, le message sortant en sélectionnant, en fonction des critères précédents, des paramètres d'un protocole de communication d'une des couches protocolaires et en générant le message sortant selon le protocole de communication paramétré avec les paramètres sélectionnés.

Dans tous les cas, au moins l'une des étapes 222 et 224 est réalisée en fonction des critères précédents qui comprennent au moins le résultat d'analyse d'évènement et dans l'exemple décrit, au moins le résultat d'analyse de communication de message, le résultat d'analyse d'évènement et le résultat d'analyse d'historique.

Au cours d'une étape 230, les moyens d'émission 108₃ émettent le message sortant.

On remarquera que le procédé de prise de décision mis en oeuvre par le dispositif 102₃ est également mis en oeuvre par les autres dispositifs du réseau 100. Ainsi, par exemple, la prise de décision réalisée à l'étape 206 précédente peut également tenir compte du contenu des bases de données.

Par ailleurs, l'invention n'est pas limitée à l'exemple de réalisation précédent.

En particulier, chaque dispositif du réseau ne remplit pas obligatoirement les trois fonctions de renseignement de la base de données d'évènements, renseignement de la base de données d'historique et prise de décision améliorée à partir des bases de données précédentes.

Ainsi, une partie des dispositifs pourrait ne remplir que l'une ou deux des trois fonctions précédentes, voire aucune. Par exemple, un dispositif du réseau ne pourrait être conçu que pour renseigner la base de données d'évènements, sans renseigner la base de données d'historique ni prendre de décision améliorée à partir de ces bases de données.

En outre, dans l'exemple précédent, la décision améliorée est prise en fonction du résultat d'analyse d'évènement, du résultat d'analyse de communication, et du résultat d'analyse d'historique. Cependant, de manière générale, la décision améliorée est prise au moins en fonction du résultat d'analyse d'évènement.

On conçoit ainsi que l'invention est basée principalement sur l'introduction de nouveaux procédés plus appropriés aux besoins technologiques du moment et des années à venir.

C'est la raison pour laquelle, l'un des apports principaux de l'invention concerne l'amélioration du mode de fonctionnement actuel des réseaux de télécommunication : statique, planifié, rigide.

Dans cette perspective, l'invention proposée peut être mise en oeuvre par un ou des programmes d'ordinateur et est basée sur l'organisation et le traitement dynamique et contextuel des équipements des réseaux de télécommunication en fonction :
1. des événements survenus dans le passé (vision du passé) :
   a. base de données dédiée afin de capitaliser les événements pertinents en fonction:
      i. des filtres statiques basés sur des conditions préétablies,
      ii. des filtres dynamiques conditionnés par des seuils,
2. des informations fonctionnelles pertinentes concernant l'état du trafic en local et en provenance d'autres composants du réseau (vision du présent) :
   a. module de pilotage dédié basé sur une planification :
      i. statique : modalités de traitement restreint et une capacité d'opération limitée quantitativement et qualitativement,
      ii. semi-automatique : modalités de traitement évolutives et une capacité d'opération conditionnée quantitativement et qualitativement,
      iii. automatique : modalités de traitement dynamique et une capacité d'opération étendue quantitativement et qualitativement,
3. des hypothèses, des prévisions et des visions à distance de l'évolution du réseau (vision du futur).

Le périmètre fonctionnel de chacun des protocoles de télécommunication est borné à la fois selon l'utilité attendue et selon le contexte d'usage. Par conséquent, les événements liés au bon ou au mauvais fonctionnement des différentes couches protocolaires peuvent révéler un certain nombre d'informations sur la nature « spatio-temporelle » d'un dysfonctionnement.

Dans ce contexte, les échanges inter-protocolaires permettent à chacune des couches protocolaires de se renseigner, de s'alerter mutuellement et de s'adapter (avec un degré de liberté plus ou moins optimal) aux circonstances.

Par exemple, le protocole ICMP (couche 4 : transport - du model OSI / model TCP/IP) est un bon candidat afin de mieux comprendre la nature de ce type d'échanges (http://abcdrfc.free.fr/rfc-vf/rfc792.html).

Ainsi le système selon l'invention est fondé sur :
∘ La mise en valeur des expériences : expériences vécues (passé),
∘ La capitalisation des observations actuelles : expériences en cours (présent),
∘ L'estimation des perspectives : expériences à vivre (futur).

L'un des apports principaux de ce système est basé sur la proposition :
1. d'un nouveau mode de traitement « circulaire / sphérique » des éventements « protocolaires » des réseaux de télécommunication :
   a. interactions inter-protocolaires : entre les mêmes couches et les mêmes protocoles,
   b. interactions intra-protocolaires : entre les couches et les protocoles différents,
2. d'une nouvelle manière d'enrichissement événementiel spatio-temporel :
   a. spatial : plus large et au-delà de l'équipement impacté,
   b. temporel : canalisation temps réel et temps différé des événements,
3. d'une logique décisionnelle multidimensionnelle :
   a. gestion locale et résolution contextuelle/planifiée des événements,
   b. gestion globale et résolution contextuelle/planifiée des événements,
4. des mécanismes de pilotage modulaire :
   a. pilotage planifié : en fonction d'un objectif/d'un usage fonctionnel prédéterminé :
      i. par exemple : les mécanismes de filtrage en fonction d'une politique de sécurité dédiée (choix d'un protocole en fonction de la sensibilité des informations à transporter ou à cause des vulnérabilités détectées ...),
   b. pilotage contextuel : en fonction d'un objectif/d'un usage fonctionnel « émergent » :
      i. par exemple : les mécanismes de routage en fonction de la disponibilité des ressources et/ou d'une alerte critique (choix d'un mode de transport plus adapté en fonction de gravité des incidents ou des informations communiquées par d'autres équipements actifs ...),
      ii. au vu des paramètres contextuels et/ou combinatoires,
   c. pilotage métier : en fonction d'un objectif /d'un usage spécialisé :
      i. par exemple : la gestion des bandes passantes (débit) des flux de trafic en fonction des critères préétablis/contraintes fonctionnelles (ex. temps réel pour les flux multimédia et temps différé pour les flux email ...),
   d. pilotage collectif : en fonction des objectifs fixés par la communauté i. par exemple : la gestion collective des solutions anti-malware/anti-virus afin de mieux maîtriser la propagation des virus, etc (synchronisation des filtres, des bases de données des signatures des virus, ...).

Ces axes de développement peuvent être mis en oeuvre et être exploités de façon locale ou de façon centralisée (ex. gestion centralisée des firewalls, des routeurs, des commutateurs, etc).

## Revendications

1. Procédé de fonctionnement d'un dispositif informatique (102₁ ; ... ; 102₅) en communication avec une pluralité d'autres dispositifs informatiques (102₁ ; ... ; 102₅) d'un réseau informatique (100), le procédé étant tel que le dispositif informatique :
- participe (212) à une communication de message,
- analyse (214) la communication de message pour obtenir un résultat d'analyse de communication de message,
- consulte (216) une base de données d'évènements (116₁...116₅) comprenant une donnée d'évènement :
+ générée (202) par un autre dispositif informatique (102₁ ; ... ; 102₅) du réseau informatique (100) à partir d'au moins une communication de message à laquelle participe cet autre dispositif informatique, et
+ enregistrée (204) par l'autre dispositif informatique (102₁ ; ... ; 102₅) dans la base de données d'évènements (116₁...116₅),
- analyse (218) la donnée d'évènement pour obtenir un résultat d'analyse d'évènement,
- consulte (220) une base de données d'historique d'actions comprenant un compte rendu d'action :
+ généré (208) par un autre dispositif informatique (102₁; ... ; 102₅) du réseau informatique (100) à partir d'une décision prise par cet autre dispositif informatique (102₁ ;... ; 102₅) affectant l'envoi de messages sortants et
+ enregistré (210) dans la base de données d'historique d'actions (124₁...124₅) par l'autre dispositif informatique (102₁ ; ... ; 102₅),
- analyse (222) le compte rendu d'action pour obtenir un résultat d'analyse d'historique,
- détermine (226) si un nouveau message sortant doit être envoyé,
- si un nouveau message sortant doit être envoyé :
+ génère (228) le nouveau message sortant, et
+ émet (230) le nouveau message sortant,
et tel qu'au moins une étape parmi :
- la détermination (226) si un nouveau message sortant doit être envoyé, et
- la génération (230) du nouveau message sortant,
est réalisée en fonction de critères comprenant au moins le résultat d'analyse d'évènement, le résultat d'analyse de communication de message et le résultat d'analyse historique, le dispositif informatique (102₁ ; ... ; 102₅) étant conforme à un modèle d'architecture en couches protocolaires, le dispositif informatique (102₁; ... ; 102₅) générant (228) le nouveau message sortant en :
- sélectionnant, en fonction des critères, un protocole de communication pour une des couches protocolaires,
le nouveau message sortant étant généré selon le protocole de communication sélectionné.

2. Procédé selon la revendication 1, dans lequel le dispositif informatique (102₁ ; ... ; 102₅) est conforme à un modèle d'architecture en couches protocolaires et dans lequel le dispositif informatique (102₁ ; ... ; 102₅) génère (228) le nouveau message sortant en :
- sélectionnant, en fonction des critères, des paramètres d'un protocole de communication d'une des couches protocolaires et, en
- générant le nouveau message sortant selon le protocole de communication paramétré avec les paramètres sélectionnés.

3. Programme d'ordinateur **caractérisé en ce qu'**il comprend des instructions de code de programme pour la mise en oeuvre d'un procédé selon l'une quelconque des revendications 1 à 2, lorsque ledit programme d'ordinateur est exécuté sur un ordinateur.

4. Dispositif informatique (102₁ ; ... ; 102₅) d'un réseau informatique (100), le dispositif informatique étant configuré pour participer à une communication de message, ledit dispositif comprenant :
- des moyens d'analyse de communication (110₁...110₅) configurés pour obtenir un résultat d'analyse de communication de message,
- des moyens (128₁ ; ... ; 128₅) pour consulter une base de données d'évènements (116₁... 116₅) comprenant une donnée d'évènement :
+ générée par un autre dispositif informatique (102₁ ; ... ; 102₅) du réseau informatique à partir d'au moins une communication de message avec cet autre dispositif informatique et
+ enregistrée par l'autre dispositif informatique (102₁ ; ... ; 102₅) dans la base de données d'évènements (116₁...116₅),
- des moyens (130₁ ; ... ; 130₃) pour analyser la donnée d'évènement pour obtenir un résultat d'analyse d'évènement,
- des moyens de consultation de base de données d'historique (132₁...132₅) conçus pour consulter la base de données d'historique (124₁...124₅) comprenant un compte rendu d'action :
+ généré par un autre dispositif informatique (102₁; ... ; 102₅) du réseau informatique (100) à partir d'une décision prise par cet autre dispositif informatique (102₁ ;... ; 102₅) affectant l'envoi de messages sortants et
+ enregistré dans la base de données d'historique d'actions (124₁...124₅) par l'autre dispositif informatique (102₁ ; ... ; 102₅),
- des moyens d'analyse de compte-rendu d'action (134₁...134₅) pour analyser un ou plusieurs comptes rendus consultés, afin d'obtenir un résultat d'analyse d'historique,
- un module de pilotage (118₁ ; ... ; 118₅) pour déterminer si un nouveau message sortant doit être envoyé et, si un nouveau message sortant doit être envoyé, pour générer un nouveau message sortant et
- des moyens (108₁ ; ... ; 108₅) pour émettre le nouveau message sortant,
le module de pilotage étant conçu pour tenir compte de critères comprenant au moins le résultat d'analyse d'évènement, le résultat d'analyse de communication de message, et le résultat d'analyse d'historique, pour réaliser au moins l'une des fonctions parmi :
- la détermination si un nouveau message sortant doit être envoyé et
- la génération du nouveau message sortant,
la génération du nouveau message sortant étant réalisée par le module de pilotage en :
- sélectionnant, en fonction desdits critères, un protocole de communication pour une des couches protocolaires,
le nouveau message sortant étant généré selon le protocole de communication sélectionné.

5. Réseau informatique, **caractérisé en ce qu'**il comprend une pluralité de dispositifs informatiques selon la revendication 4.

## Patentansprüche

1. Verfahren zum Betrieb einer Computervorrichtung (102₁; ...; 102₅) in Kommunikation mit einer Mehrzahl von anderen Computervorrichtungen (102₁; ...; 102₅) eines Computernetzwerks (100), wobei das Verfahren derart ist, dass die Computervorrichtung:
- an einer Nachrichtenkommunikation (212) teilnimmt,
- die Nachrichtenkommunikation (214) analysiert, um ein Analyseergebnis der Nachrichtenkommunikation zu erhalten,
- eine Ereignis-Datenbank (116₁ ... 116₅) konsultiert (216), die ein Ereignis-Datenelement aufweist:
+ erzeugt (202) durch eine andere Computervorrichtung (102₁; ...; 102₅) des Computernetzwerks (100) ausgehend von mindestens einer Nachrichtenkommunikation, an der diese andere Computervorrichtung teilnimmt und
+ gespeichert (204) durch die andere Computervorrichtung (102₁; ...; 102₅) in der Ereignis-Datenbank (116₁; ...; 116₅),
- das Ereignis-Datenelement analysiert (218), um ein Ereignis-Analyseergebnis zu erhalten,
- eine Aktionsüberblick-Datenbank konsultiert (220), die ein Aktionsprotokoll aufweist:
+ erzeugt (208) durch eine andere Computervorrichtung (102₁; ...; 102₅) des Computernetzwerks (100) ausgehend von einer Entscheidung, getroffen von dieser anderen Computervorrichtung (102₁; ...; 102₅), die das Senden von ausgehenden Nachrichten betrifft und
+ gespeichert (210) in der Aktionsüberblick-Datenbank (124₁ ... 124₅) durch die andere Computervorrichtung (102₁; ...; 102₅),
- das Aktionsprotokoll analysiert (222), um ein Überblicks-Analyseergebnis zu erhalten,
- ermittelt (226), ob eine neue ausgehende Nachricht geschickt werden soll,
- falls eine neue ausgehende Nachricht geschickt werden soll:
+ die neue ausgehende Nachricht erzeugt (228) und
+ die neue ausgehende Nachricht sendet (230),
und derart, dass mindestens ein Schritt unter:
- der Ermittlung (226), ob ein neue ausgehende Nachricht gesendet werden soll und
- der Erzeugung (230) der neuen ausgehenden Nachricht,
abhängig von Kriterien durchgeführt wird, die mindestens das Ereignis-Analyseergebnis, das Nachrichtenkommunikations-Analyseergebnis und das Überblicks-Analyseergebnis aufweisen, wobei die Computervorrichtung (102₁; ...; 102₅) konform mit einem Architekturmodell in Protokollschichten ist, wobei die Computervorrichtung (102₁; ...; 102₅) die neue ausgehende Nachricht erzeugt (228), indem sie:
- in Abhängigkeit der Kriterien ein Kommunikationsprotokoll für eine der Protokollschichten auswählt,
wobei die neue ausgehende Nachricht gemäß dem ausgewählten Kommunikationsprotokoll erzeugt wird.

2. Verfahren gemäß Anspruch 1, in dem die Computervorrichtung (102₁; ...; 102₅) mit einem Architekturmodell in Protokollschichten konform ist und in dem die Computervorrichtung (102₁; ...; 102₅) die neue ausgehende Nachricht erzeugt (228) indem sie:
- abhängig von den Kriterien Parameter eines Kommunikationsprotokolls einer der Protokollschichten auswählt und indem sie
- die neue ausgehende Nachricht gemäß dem mit den ausgewählten Parametern parametrisierten Kommunikationsprotokoll erzeugt.

3. Computerprogramm, dadurch charakterisiert, dass es Programmcodeinstruktionen aufweist, um ein Verfahren gemäß einem der Ansprüche 1 bis 2 durchzuführen, wenn das Computerprogramm auf einem Computer ausgeführt wird.

4. Computervorrichtung (102₁; ...; 102₅) eines Computernetzwerks (100), wobei die Computervorrichtung zum Teilnehmen an einer Nachrichtenkommunikation eingerichtet ist, wobei die Vorrichtung aufweist:
- Mittel zum Kommunikations-Analysieren (110₁ ... 110₅), um ein Analyseergebnis der Nachrichtenkommunikation zu erhalten,
- Mittel (128₁; ...; 128₅) zum Konsultieren einer Ereignis-Datenbank (116; ...; 116), die ein Ereignis-Datenelement aufweist:
+ erzeugt durch eine andere Computervorrichtung (102₁; ...; 102₅) des Computernetzwerks (100) ausgehend von mindestens einer Nachrichtenkommunikation, an der diese andere Computervorrichtung teilnimmt und
+ gespeichert durch die andere Computervorrichtung (102₁; ...; 102₅) in der Ereignis-Datenbank (116₁ ... 116₅),
- Mittel (130₁; ...; 130₃) zum Analysieren des Ereignis-Datenelements, um ein Ereignis-Analyseergebnis zu erhalten,
- Mittel zum Überblicks-Datenbank-Konsultieren (132₁ ... 132₅), vorgesehen zum Konsultieren der Überblicks-Datenbank (124₁ ... 124₅), die ein Aktionsprotokoll aufweist:
+ erzeugt durch eine andere Computervorrichtung (102₁; ...; 102₅) des Computernetzwerks (100) ausgehend von einer Entscheidung, getroffen von dieser anderen Computervorrichtung (102₁; ...; 102₅), die das Senden von ausgehenden Nachrichten betrifft und
+ gespeichert in der Aktionsüberblick-Datenbank (124₁ ... 124₅) durch die andere Computervorrichtung (102₁; ...; 102₅),
- Mittel zum Aktionsprotokoll-Analysieren (134₁ ... 134₅), um ein oder mehrere konsultierte Protokolle zu analysieren, um ein Überblicks-Analyseergebnis zu erhalten,
- ein Steuermodul (118₁; ...; 118₅) zum Ermitteln, , ob eine neue ausgehende Nachricht geschickt werden soll und, falls eine neue ausgehende Nachricht geschickt werden soll zum Erzeugen der neuen ausgehenden Nachricht und
- Mittel (108₁; ...; 108₅) zum Senden der neuen ausgehenden Nachricht, wobei das Steuermittel vorgesehen ist zum Berücksichtigen von Kriterien, die mindestens das Ereignis-Analyseergebnis, das Nachrichtenkommunikations-Analyseergebnis und das Überblicks-Analyseergebnis aufweisen, um mindestens eine der Funktionen zu realisieren von:
- der Ermittlung, ob ein neue ausgehende Nachricht gesendet werden soll und
- der Erzeugung der neuen ausgehenden Nachricht,
wobei die Erzeugung der neuen ausgehenden Nachricht durch das Steuermodul realisiert wird, indem sie:
- in Abhängigkeit der Kriterien ein Kommunikationsprotokoll für eine der Protokollschichten auswählt,
wobei die neue ausgehende Nachricht gemäß dem ausgewählten Kommunikationsprotokoll erzeugt wird.

5. Computernetzwerk, dadurch charakterisiert, dass es eine Mehrzahl von Computervorrichtungen gemäß Anspruch 4 aufweist.

## Claims

1. Method of operating a computing device (102₁; ...; 102₅) in communication with a plurality of other computing devices (102₁; ...; 102₅) of a computer network (100), the method being such that the computing device:
- participates (212) in a message communication,
- analyses (214) the message communication in order to obtain a message communication analysis result,
- consults (216) an event database (116₁...116₅) containing an event datum:
+ generated (202) by another computing device (102₁; ...; 102₅) of the computer network (100) from at least one message communication in which that other computing device participates, and
+ stored (204) by the other computing device (102₁; ...; 102₅) in the event database (116₁...116₅),
- analyses (218) the event datum in order to obtain an event analysis result,
- consults (220) an action history database containing an action report:
+ generated (208) by another computing device (102₁; ...; 102₅) of the computer network (100) from a decision taken by that other computing device (102₁; ...; 102₅) affecting the sending of outgoing messages and
+ stored (210) in the action history database (124₁...124₅) by the other computing device (102₁; ...; 102₅),
- analyses (222) the action report in order to obtain a history analysis result,
- determines (226) if a new outgoing message has to be sent,
- if a new outgoing message has to be sent:
+ generates (228) the new outgoing message, and
+ transmits (230) the new outgoing message,
and such that at least one step from:
- determining (226) whether a new outgoing message has to be sent, and
- generating (230) the new outgoing message
is carried out in dependence on criteria including at least the event analysis result, the message communication analysis result and the history analysis result, the computing device (102₁; ...; 102₅) being in accordance with a layered protocol architecture model, the computing device (102₁; ...; 102₅) generating (228) the new outgoing message by:
- selecting, in dependence on the criteria, a communication protocol for one of the protocol layers,
the new outgoing message being generated in accordance with the selected communication protocol.

2. Method according to claim 1, wherein the computing device (102₁; ...; 102₅) is in accordance with a layered protocol architecture model, and wherein the computing device (102₁; ...; 102₅) generates (228) the new outgoing message by:
- selecting, in dependence on the criteria, parameters of a communication protocol of one of the protocol layers, and by
- generating the new outgoing message in accordance with the communication protocol parameterised with the selected parameters.

3. Computer program, **characterised in that** it comprises program code instructions for carrying out a method according to either claim 1 or claim 2 when said computer program is executed on a computer.

4. Computing device (102₁; ...; 102₅) of a computer network (100), the computing device being configured to participate in a message communication, said device comprising:
- communication analysis means (110₁ ...110₅) configured to obtain a message communication analysis result,
- means (128₁; ...; 128₅) for consulting an event database (116₁...116₅) containing an event datum:
+ generated by another computing device (102₁; ...; 102₅) of the computer network from at least one message communication with that other computing device, and
+ stored by the other computing device (102₁; ...; 102₅) in the event database (116₁...116₅),
- means (130₁; ...; 130₃) for analysing the event datum in order to obtain an event analysis result,
- history database consultation means (132₁...132₅) designed to consult the history database (124₁...124₅) containing an action report:
+ generated by another computing device (102₁; ...; 102₅) of the computer network (100) from a decision taken by that other computing device (102₁; ...; 102₅) affecting the sending of outgoing messages and
+ stored in the action history database (124₁...124₅) by the other computing device (102₁; ...; 102₅),
- action report analysis means (134₁...134₅) for analysing one or more consulted reports, in order to obtain a history analysis result,
- a control module (118₁; ...; 118₅) for determining whether a new outgoing message has to be sent and, if a new outgoing message has to be sent, for generating a new outgoing message, and
- means (108₁; ...; 108₅) for transmitting the new outgoing message,
the control module being designed to take account of criteria including at least the event analysis result, the message communication analysis result and the history analysis result, in order to carry out at least one of the functions among:
- determining whether a new outgoing message has to be sent and
- generating the new outgoing message,
generation of the new outgoing message being carried out by the control module by:
- selecting, in dependence on said criteria, a communication protocol for one of the protocol layers,
the new outgoing message being generated in accordance with the selected communication protocol.

5. Computer network, **characterised in that** it comprises a plurality of computing devices according to claim 4.
